# EUROPEAN PATENT APPLICATION

(11) **EP 4 726 079 A1**
(43) Date of publication of application: **15.04.2026**
(21) Application number: 24383110.4
(22) Date of filing: 11.10.2024
(51) Int. Cl.: C25D 5/02, C25D 5/18, C25D 5/54, C25D 7/04, C25D 7/06, C25D 17/12

(54) **ELECTROLYTIC CELL AND METHOD FOR OBTAINING A CERAMIC ELECTRODE**

(71) Applicant: Licitar, Antonijo, 10000 Zagreb (HR); Sima, Marc, 07340 Alaro (ES)
(72) Inventor: LICITAR, Antonijo, 10 000 ZAGREB (HR)
(74) Representative: Bardehle Pagenberg S.L.

(57) **Abstract**

The present disclosure relates to methods for obtaining ceramic electrodes. The methods comprise providing a porous ceramic matrix comprising an inner matrix extending between a first outer surface and a second outer surface, and forming a cathode assembly, wherein the cathode assembly comprises a first electrode and the porous ceramic matrix, and wherein the assembly is formed contacting the first electrode at least with a portion of the second outer surface. The method further comprises providing a second electrode, immersing the cathode assembly and the second electrode in an electrolyte solution, and electroplating the ceramic matrix, wherein electroplating comprises applying an electric potential to the first and second electrodes, wherein the second electrode is an anode, such that cations in the electrolyte solution pass through the first outer surface and the inner matrix and deposit onto the portion of the second outer surface contacting the cathode. The method further comprises applying an electric potential to the ceramic matrix.

## Description

### FIELD

The present disclosure relates to methods for obtaining electrodes which may be used e.g. in electrolysis. The present disclosure more particularly relates to ceramic electrodes, and in examples provides methods for electroplating a non-conductive ceramic matrix.

### BACKGROUND

The development of technologies that can use renewable sources for generating green energy and fuels has increased in the recent years. Out of these renewable sources, hydrogen is perhaps the most promising as a renewable energy storage and renewable fuel.

Hydrogen is a versatile energy carrier, which can help tackle various critical energy challenges. Hydrogen is in fact one of the few materials that is regarded as an energy carrier which may be used to power transportation, e.g. cars, boats or even aircraft. Although hydrogen can be obtained from natural gas, oil, or coal, a more sustainable method for obtaining hydrogen (and reducing greenhouse gas emissions) relies on hydrolysis of water. Hydrolysis of water is however energy intensive and thus relies on the use of important amounts of electricity. In order for hydrogen to qualify as "green hydrogen" and really be sustainable, the electricity should be provided from renewable sources such as solar or wind energy. It is in any case desirable to find methods and systems which can produce hydrogen and/or sustainably produce hydrogen with a reduced energy need.

Water electrolysis can be carried out in an electrolyzer, which is a device consisting of two conductive electrodes (typically electrode plates), a cathode and an anode, immersed in the solution to be electrolyzed and separated by a membrane.

The conductive electrodes are generally made of stainless steel, platinum or graphite. These compounds tend to be quite expensive, and new approaches for increasing productivity of the reaction while at the same time reducing costs are being considered.

With the aim of reducing the cost of the electrodes, composite electrodes are being developed. As these composite electrodes comprise further materials apart from the above-mentioned metals, the amount of metals used to manufacture the electrodes is considerably reduced and more reasonably priced electrodes can be obtained. Out of these materials, ceramic materials such as silica and alumina are becoming more and more popular. Ceramics, however, tend to have poor conductivity, and electrolysis of water using ceramic-based electrodes is not as efficient as it is when a metal plate is used.

The present disclosure provides ceramic electrodes and methods for manufacturing such electrodes which overcome some of the above-mentioned drawbacks.

### SUMMARY

In an aspect of the present disclosure, a method for obtaining a ceramic electrode is provided. The method comprises providing a porous ceramic matrix extending in a longitudinal direction between a first end and a second end and comprising an inner matrix extending between a first outer surface and a second outer surface. The method further comprises forming a cathode assembly, wherein the cathode assembly comprises a first electrode and the porous ceramic matrix, and wherein the assembly is formed contacting the first electrode at least with a portion of the second outer surface.

The method further comprises providing a second electrode and immersing the cathode assembly and the second electrode in an electrolyte solution, such that the first outer surface of the ceramic matrix is in contact with the electrolyte solution. The method then comprises electroplating the ceramic matrix, wherein electroplating comprises applying an electric potential to the first and second electrodes, wherein the second electrode is an anode, such that cations in the electrolyte solution pass through the first outer surface and the inner matrix ceramic matrix and deposit onto the portion of the second outer surface contacting the cathode and applying an electric potential to the ceramic matrix.

According to this aspect, electrically conductive material may be deposited uniformly within the pores of the non-conductive ceramic matrix throughout its entire body. Electroplating may be progressively performed, from the surface of the ceramic matrix being the furthest away from the electrolyte solution to the surface of the ceramic matrix being in immediate contact with the electrolyte solution.

When a conductive ceramic material is used, that is, when a ceramic already comprising conductive material within its matrix is used, electrodeposition takes place in the outer surface of the ceramic material, as the cations deposited on the surface will prevent deposition of further cations in the inner matrix. Accordingly, the method allows electroplating via an electrolytic cell a non-conductive ceramic matrix in its entirety.

In addition, with the method, an increased surface area of the ceramic matrix may be electroplated using less material. The electrically conductive particles deposited on the ceramic matrix may provide a more efficient ceramic electrode comprising less conductive metals e.g. nickel or platinum than the prior art solutions i.e. with the same or even less amount of coating material than other prior art solutions, a better result when using the ceramic electrode can be achieved when used e.g. in hydrolysis.

The method may provide a ceramic electrode with increased reactive surface area which may be used to generate hydrogen by electrolyzing water in a more efficient manner, as the water electrolysis or hydrolysis may take place throughout the entire body of the ceramic electrode i.e. also within the inner matrix of the electrode. The use of the ceramic electrode may allow the obtention of hydrogen and oxygen molecules through water electrolysis without the need of using a membrane.

Throughout the present disclosure, an electrode may be understood as a conductor which may be used to establish electrical contact with an electrical circuit, e.g. a power supply or a power supply with power converter or frequency generator. Accordingly, a ceramic electrode may be used to describe an electrode which is at least partly made of ceramic materials or compounds.

In electrolytic cells, negatively charged electrodes are called cathodes and positively charged electrodes are called anodes.

It should be noted that applying an electric potential may include a pulsed DC voltage as well as an alternating (AC) voltage.

Throughout the present disclosure, non-conductive materials may be understood as materials which are not capable of conducting electricity, as they do not have free electrons.

The method may further comprise electroplating an inner matrix of the ceramic matrix. The cations of the electrolytic solution are first deposited at the furthest locations of the ceramic matrix, those that are in contact with or directly neighboring the first electrode. As the electroplating is carried out, the ceramic matrix (with depositions) is becoming more and more conductive. The method may then further comprise applying an electric current to the electroplated inner matrix and electroplating the first and/or second outer surfaces of the ceramic matrix.

In some examples, the cathode assembly may be formed contacting the first electrode with the second outer surface of the ceramic matrix, and enclosing the first electrode between the second outer surface of the ceramic matrix and an insulating non-porous cover. In other examples, the ceramic matrix may comprise a hollow area along the longitudinal direction and the cathode assembly may be formed enclosing the first electrode within the hollow area of the ceramic matrix.

In some examples, the method may further comprise sintering the electroplated ceramic matrix and obtaining a ceramic electrode. Further, the ceramic electrode may be used to perform water electrolysis.

According to a further aspect, an electrode is provided that is obtainable by examples of the method according to the fist aspect. Such electrodes are characterized by a hollow ceramic matrix with deposition of conductive material throughout the ceramic matrix and in a more homogeneous manner than known in the prior art.

According to yet a further aspect, a method for performing water electrolysis using such a ceramic electrode is provided.

In yet a further aspect, an electrolytic cell for electroplating is provided. The cell comprises an electrolyte solution, a power source configured to provide DC current, a first electrode electrically connected to a negative terminal of the power source and a second electrode electrically connected to a positive terminal of the power source. The first electrode is part of a cathode assembly, the assembly comprising the first electrode and a porous ceramic matrix, wherein a first outer surface of the ceramic matrix is in contact with the electrolyte, and wherein a second outer face of the ceramic matrix is in contact with the first electrode.

In some examples, the ceramic matrix may comprise a micro-porous structure. In some examples, the ceramic matrix may comprise at least one of zirconia, yttria, alumina and silica. The ceramic electrode comprising these materials may be considerably more cost efficient than electrodes exclusively made from electrically conductive materials. Electrodes made from these materials may magnify water transformation into hydrogen and oxygen due to the capillary effect that they produce, enhancing the contact between water and the electrode.

In some examples, the electrolyte solution of the electrolytic cell may be formed by diluting nanomaterials or salts of nanomaterials into a solvent.

Additional objects, advantages and features of embodiments of the present disclosure will become apparent to those skilled in the art upon examination of the description, or may be learned by practice.

### BRIEF DESCRIPTION OF THE DRAWINGS

Figure 1 shows a flowchart of a method for obtaining a ceramic electrode according to an example of the present disclosure;
Figure 2 schematically illustrates a ceramic matrix according to an example of the present disclosure;
Figures 3a schematically illustrates a cross-section of a ceramic matrix according to an example of the present disclosure;
Figure 3b schematically illustrates a cross-section of a ceramic matrix according to another example of the present disclosure;
Figures 4a - 4c schematically illustrate a cross-section of an electrolytic cell according to an example of the present disclosure;
Figures 4d - 4f schematically illustrate a cross-section of an electrolytic cell according to another example of the present disclosure and
Figure 5 schematically illustrates a ceramic electrode according to an example of the present disclosure.

### DETAILED DESCRIPTION OF EXAMPLES

Reference now will be made in detail to embodiments of the disclosure, one or more examples of which are illustrated in the drawings. Each example is provided by way of explanation, not as a limitation. In fact, it will be apparent to those skilled in the art that various modifications and variations can be made in the present disclosure without departing from the scope or spirit of the teaching. For instance, features illustrated or described as part of one embodiment can be used with another embodiment to yield a still further embodiment. Thus, it is intended that the present disclosure covers such modifications and variations as come within the scope of the appended claims and their equivalents.

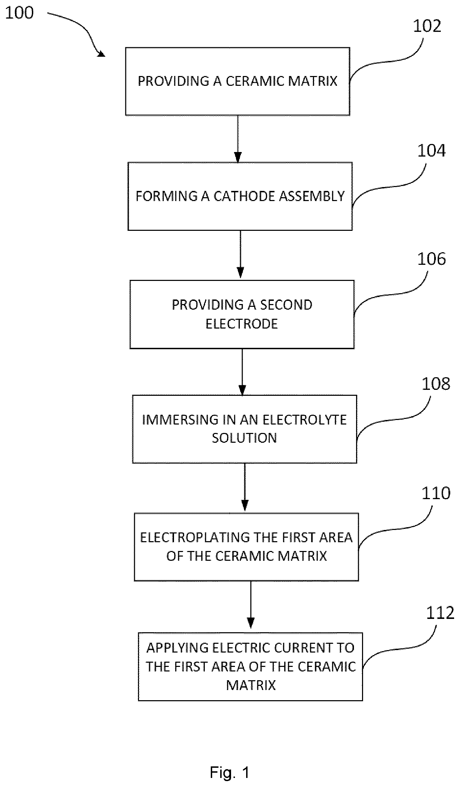

The present disclosure provides a method 100 for obtaining a ceramic electrode. Figure 1 shows a flow chart of the method 100.

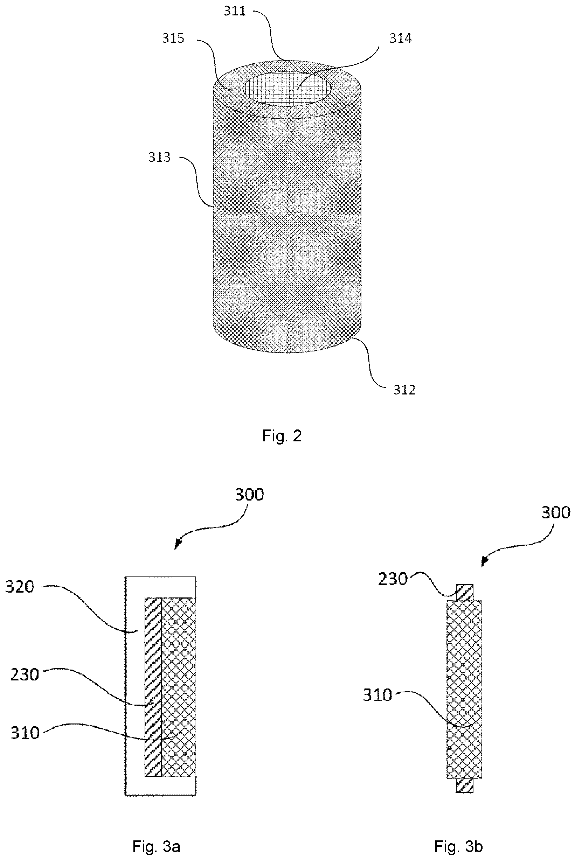

The method 100 comprises, at step 102, providing a porous ceramic matrix. The ceramic matrix may be non-conductive. An example of a ceramic matrix 310 which may be used in the method 100 is shown in figure 2.

The ceramic matrix 310 extends in a longitudinal direction between a first end 311 and a second end 312 and comprises a first outer surface 313, a second outer surface 314 and an inner matrix arranged between the first and second outer surfaces 313, 314. The second outer surface is opposite the first outer surface 313. The ceramic matrix may define a 3D structure.

In some examples, the ceramic matrix 310 may be substantially hollow and include a hollow area along a longitudinal direction e.g. along a longitudinal axis. A ceramic electrode comprising high surface area for a given amount of material may be obtained. In other example, the ceramic matrix 310 may have a shape of a substantially flat plate.

In the illustrated case, the ceramic matrix has a shape of an annular cylinder. The first outer surface is radially outside the ceramic matrix, whereas the second outer surface is radially at the inside of the ceramic matrix.

The ceramic matrix 310 may be made of e.g. one of zirconia, yttria, alumina and silica. These materials are less expensive than metals which are generally used as electrodes e.g. for water hydrolysis, and in addition comprise porous structures which allow the obtention of a coated matrix with increased surface area.

Further, the non-conductive ceramic matrix 310 may comprise a micro-porous structure. Conductive materials may be deposited within the pores of the ceramic matrix, allowing obtaining a ceramic electrode with increased surface area of electrically conductive materials and therefore higher efficiency.

The method 100 for obtaining a ceramic electrode further comprises, at step 104, forming a cathode assembly 300, illustrated e.g. in figure 3a. The cathode assembly comprises a first electrode 230 and the ceramic matrix 310. The cathode assembly 300 is formed contacting the first electrode at least with a first area of the ceramic matrix. In particular, the second outer surface of the ceramic matrix may be in contact with the first electrode 230.

The first electrode 230 may be an electrode plate of an electrically conductive material. In some examples, the first electrode 230 may be made of a metal which will be negatively charged i.e. which will act as a cathode.

In some examples, the first electrode 230 may be made of a stainless-steel material. In some examples, the first electrode 230 may be coated with an electrically conductive material.

Figures 3a and 3b show different embodiments of a cathode assembly 300 according to two different examples of the present disclosure.

As shown in the example of figure 3a, the cathode assembly 300 may be formed contacting the first electrode 230 with the second outer surface of the ceramic matrix and enclosing the first electrode 230 between the second outer surface of the ceramic matrix and a non-porous insulating cover 320.

The non-porous insulating cover 320 may be made of e.g. rubber. In some examples, the cover may define an enclosure. The non-porous cover 320 may be configured to hold the first electrode 230 and the ceramic matrix 310, which may be fixed in the non-porous cover, all three elements forming the cathode assembly 300.

In some examples, the non-porous insulating cover 320 may at least enclose the negatively charged electrode, the first end 311 of the ceramic matrix, the second end 312 of the ceramic matrix and the first outer surface of the ceramic matrix. The non-porous insulating cover may have a substantially C-shaped cross-section. An objective of the non-porous cover is to avoid contact of the first electrode with the electrolytic solution. As will be explained herein, the electrolyte fluid, and the cations inside the electrolyte fluid can only reach the first electrode through the pores of the ceramic matrix.

Figure 3b shows another embodiment of the cathode assembly 300. The ceramic matrix of figure 3b comprises a hollow area along the longitudinal direction, and the cathode assembly 300 may be formed enclosing the first electrode 230 within the hollow area of the ceramic matrix.

In some examples, the longitudinal length of the first electrode 230 may be equal to or shorter than the longitudinal length of the ceramic matrix 310. In other examples, as schematically shown in figure 3b, the longitudinal length of the first electrode 230 may be longer than the longitudinal length of the ceramic matrix 310, and the first electrode 230 may extend beyond the first and second end 311, 312 of the ceramic matrix. In such cases, the portion of the first electrode 230 that extend beyond the matrix may be shielded from the electrolyte fluid in a variety of ways, e.g. one end of the electrode may be arranged outside the body of electrolyte fluid, or an end of the electrode may be covered by a non-porous insulating cover in a manner as explained with reference to figure 3a.

The method 100 further comprises, at step 106, providing a second electrode 220.

The second electrode 220 may be an electrode plate of an electrically conductive material. In some examples, the second electrode 220 may be made of a metal which will be positively charged i.e. which will act as an anode.

In some examples, the second electrode may be made of a stainless-steel material. In some examples, the second electrode may be coated with an electrically conductive material.

In some examples, the first and/or the second electrodes 230, 220 may be cylindrically shaped. In other examples, the first and/or second electrode 230, 220 may have other shapes e.g. they may be flat or spherical.

Further, the method 100 for obtaining a ceramic electrode comprises, at step 108, immersing the cathode assembly 300 and the second electrode 220 in an electrolyte solution 210, such that the second outer surface of the ceramic matrix 310 is in contact with the electrode 230, whereas the first outer surface is in contact with the electrolyte solution 210.

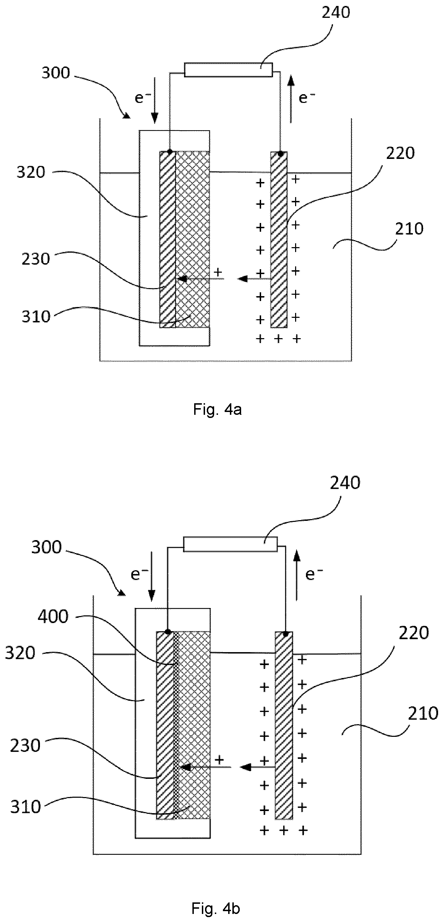

Figures 4a - 4c show a cross-section of an electrolytic cell 200 according to an example of the present disclosure. The electrolytic cell 200 comprises the cathode assembly of figure 3a.

Figure 4a schematically illustrates an example of method step 108. The electrolytic cell 200 comprises an electrolyte solution 210, a second electrode 220, a first electrode 230, and a power source 240 configured to apply electrical energy to the electrodes. The power source may provide DC current, e.g. pulsed DC current.

The power source may be a battery cell or similar, but may also be an AC source with a suitable power converter. A positive terminal of the power supply is connected to the second electrode 220, such that the second electrode 220 is positively charged, and a negative terminal of the power supply is connected to the first electrode 230 such that the first electrode is negatively charged.

In some examples, the electrolyte solution 210 may comprise cations of nickel (Ni) or platinum (Pt). In some examples, the electrolyte solution 210 may comprise nanomaterials. In further examples, salts made of nanomaterials may be diluted to form the electrolyte solution.

In some examples, the electrolyte solution 210 may be formed by diluting a salt into a solvent i.e. the electrolyte solution may be a solution of a salt of the metal to be coated. In some examples, salts of platinum or nickel may be diluted.

As shown in figure 4a, the negatively charged electrode 230 is part of a cathode assembly 300, the assembly comprising the negatively charged electrode 230 contacting at least a first area of the non-conductive ceramic matrix.

In this particular example, the cathode assembly 300 comprises the negatively charged electrode 230 enclosed between the non-conductive ceramic matrix 310 and a non-porous insulating cover 320.

The non-porous insulating cover 320 may at least enclose the negatively charged electrode 230, a first end 311 and a second end 312 opposite the first end of the ceramic matrix 310 and the first outer surface 313 of the ceramic matrix. The insulating cover 320 may prevent the first electrode 230 and most part of the ceramic matrix from directly contacting the electrolyte solution. Accordingly, only the second outer surface 314 of the ceramic matrix, opposite to the first outer surface 313, may be in direct contact with the electrolyte solution 210.

Figures 4a - 4c further represent the application of an electric potential to the first and second electrodes according to an example of the present disclosure.

Figure 4a shows that the electric potential causes the cations in the electrolyte solution to move towards the first electrode, which acts as a cathode. The cations can only access the electrode 230 through the second surface 314 of the ceramic matrix, as the insulating cover 320 blocks any other possible path. Accordingly, when an electric potential is applied, the cations pass through the outer surface 314 of the ceramic matrix, pass through the inner matrix 315 and finally reach the first electrode 230, where they are reduced and deposited forming a coating.

The method further comprises, at step 110, electroplating the first area of the ceramic matrix 310. Electroplating comprises applying an electric potential to the first and second electrodes 220, 230, wherein the second electrode 220 is an anode, such that cations in the electrolyte solution 210 pass through the first outer surface 313 and/or the second outer surface 314 of the ceramic matrix and deposit into the first area of the ceramic matrix contacting the cathode.

Coating will take place of both the electrode 230 but also of the ceramic matrix 310 which thereby becomes slightly conductive. The initial deposition at the ceramic matrix will however be directly adjacent to the electrode 230.

The method may comprise coating the first area of the ceramic matrix 310 with an electrically conductive material. In some examples, the electrically conductive material may be, nickel, platinum or titanium. In other examples, the material may be an electrically conductive nanomaterial, e.g. nanoparticles of nickel, platinum or titanium.

Figure 4b schematically shows that electroplating results in deposition of cations onto the second outer surface 313 of the ceramic matrix contacting the first electrode or cathode 230. As a result, a coating 400 of electrically conductive particles is achieved.

The cations may deposit within the pores in the first outer surface 313 of the ceramic matrix. The deposition of cations may lead to a composite ceramic matrix comprising electrically conductive particles i.e. electrodeposition in the first outer surface of the ceramic matrix may turn it into a conductive surface.

Finally, the method comprises, at step 112 connecting the ceramic matrix 310 to an electric current and applying an electric potential to the first area of the ceramic matrix.

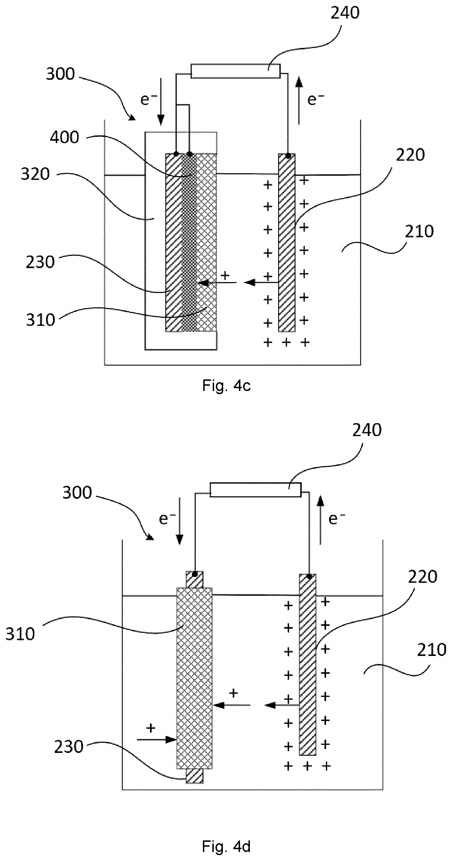

An example of step 112 is schematically illustrated in figure 4c. In some examples, the method may further comprise electroplating an inner matrix of the ceramic matrix.

As shown in figure 4c, the ceramic matrix 310, now comprising a coating 400 with electrically conductive particles, is connected to an electric current. In the example, the ceramic matrix is electrically conductive at its second outer surface, which is the surface located the furthest away from the electrolyte solution 210 i.e. the first outer surface 313. Electric potential is applied to the first outer surface 313 of the ceramic matrix. The deposition of conductive material will attract more cations, which will not be blocked from accessing the inner side of the ceramic matrix, as the inner matrix will be electroplated prior to the outer surface.

Cations in the electrolyte solution 210 will pass through the second outer surface 314 of the ceramic matrix and deposit within the inner matrix 315 closest to the first outer surface 313 of the ceramic matrix. Accordingly, the ceramic matrix may be uniformly electroplated, from the first outer surface 313 towards the second outer side 314.

In some examples, electroplating an inner matrix may comprise adjusting the electric current applied to the ceramic matrix. In some examples, the current may be adjusted depending on the material of the coating and depending on the material of the ceramic matrix. In some examples, the current may be adjusted depending on the conditions within the electrolytic cell e.g. conductivity, resistance. The current may be adjusted automatically i.e. suitable sensors may be used to determine the quantity of deposition or the conductivity of the ceramic matrix and current may be adapted accordingly.

During parts of the method, electric current may be applied to both the electrode 230 and to the ceramic matrix. At some point, electric current may be disconnected from electrode 230.

In some examples, the method may further comprise applying an electric potential to the inner side of the ceramic matrix and electroplating the second outer surface of the ceramic matrix.

A ceramic electrode comprising electrically conductive particles throughout its entire matrix may be obtained.

Figures 4d - 4f show a cross-section of an electrolytic cell 200 according to another example of the present disclosure. These figures also represent the application of an electric potential to the first and second electrodes, however, the electrolytic cell 200 now comprises the cathode assembly of figure 3b.

Similarly to the process explained with reference to figure 4a, figure 4d shows that the application of electric potential to the first 230 and second 220 electrodes causes the cations in the electrolyte solution 210 to move towards the first electrode 230, which acts as a cathode.

In this example, both the first and second outer surfaces 313, 314 of the ceramic matrix are in direct contact with the electrolyte solution 310, and therefore the cations can access the electrode 230 enclosed within the hollow area of the ceramic matrix through the entire outer surface of the ceramic matrix. When an electric potential is applied, the cations pass through the entire outer surface of the ceramic matrix and reach all the surface of the electrode 230, where they are reduced and deposited forming a coating.

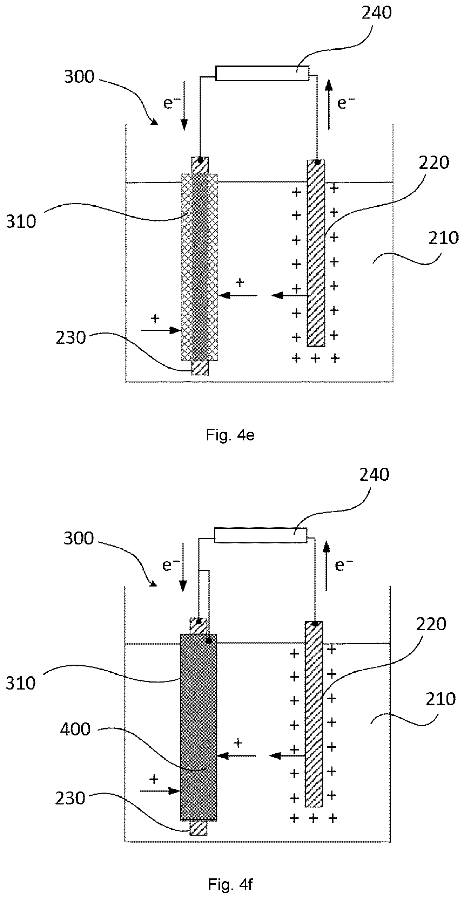

Figure 4e schematically shows that electroplating further results in deposition of cations onto the first area of the ceramic matrix contacting the first electrode 230 i.e. the inner surface of the ceramic matrix defining the hollow area along the longitudinal length of the ceramic matrix.

Accordingly, when an electric potential is applied, the cations in the electrolyte solution pass through the first outer surface 313 and the second outer surface 314 of the ceramic matrix and deposit onto the first area of the ceramic matrix contacting the cathode. As a result, a coating 400 of electrically conductive particles is achieved throughout the entire inner surface of the ceramic matrix.

Finally, figure 4f shows the application of an electric potential to the ceramic matrix 310. The ceramic matrix now comprises electrically conductive particles arranged in its inner surface i.e. its inner core. The ceramic matrix will be slowly electroplated from its inner core to the outer surfaces.

A ceramic electrode comprising electric material deposited uniformly throughout the whole electrode is provided.

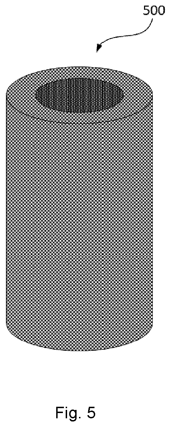

In some examples, the method may further comprise sintering the electroplated ceramic matrix and obtaining a ceramic electrode 500. Figure 5 schematically shows an example of a ceramic electrode 500 according to an example of the present disclosure.

In some examples, the electroplated ceramic matrix may be shaped into a desired configuration prior to sintering.

The ceramic electrode 500 of the present disclosure may be used to perform water hydrolysis and obtain hydrogen and oxygen molecules in a highly efficient manner, as the water electrolysis may take place throughout the entire body of the ceramic electrode 500 i.e. also within the inner matrix of the electrode.

In addition, the ceramic material 310 in the ceramic electrode 500 may enhance water adsorption due to the capillary action within the ceramic electrode, providing increased contact between the water and the electrode and promoting weakness of the bond between hydrogen and oxygen molecules in a more efficient way.

The ceramic electrode 500 may further allow the obtention of hydrogen and oxygen molecules through water electrolysis without the need of using a membrane and therefore avoiding membrane maintenance, which is an expensive and cumbersome task.

Further, the ceramic electrode 500 of the present disclosure may also be used in nickel-cadmium batteries and for the obtention of hydrogen fuel.

The method 100 for obtaining a ceramic electrode may be carried out in an electrolytic cell 200. The electrolytic cell 200 may be an electroplating cell.

This written description uses examples to disclose the teaching, including the preferred embodiments, and also to enable any person skilled in the art to practice the teaching, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A method for obtaining a ceramic electrode, comprising:
providing a porous ceramic matrix extending in a longitudinal direction between a first end and a second end and comprising an inner matrix extending between a first outer surface and a second outer surface;
forming a cathode assembly, wherein the cathode assembly comprises a first electrode and the porous ceramic matrix, and wherein the assembly is formed contacting the first electrode at least with a portion of the second outer surface;
providing a second electrode;
immersing the cathode assembly and the second electrode in an electrolyte solution, such that the first outer surface of the ceramic matrix is in contact with the electrolyte solution;
electroplating the ceramic matrix, wherein electroplating comprises applying an electric potential to the first and second electrodes, wherein the second electrode is an anode, such that cations in the electrolyte solution pass through the first outer surface and the inner matrix and deposit onto the portion of the second outer surface contacting the cathode; and
applying an electric potential to the ceramic matrix.

2. The method of claim 1, wherein the cathode assembly is formed by enclosing the first electrode between the second outer surface of the ceramic matrix and an insulating non-porous cover.

3. The method of claim 1, wherein the ceramic matrix comprises a hollow area along the longitudinal direction and wherein the cathode assembly is formed enclosing the first electrode within the hollow area of the ceramic matrix.

4. The method of any of claims 1-3, further comprising electroplating the inner matrix of the ceramic matrix.

5. The method of claim 4, wherein electroplating the inner matrix comprises adjusting the electric current applied to the ceramic matrix and/or disconnecting electric current to the first electrode.

6. The method of any of claims 1 - 5, further comprising sintering the electroplated ceramic matrix and obtaining a ceramic electrode.

7. The method of any of claims 1-6, wherein the electrolyte solution comprises cations of nickel or platinum.

8. The method of any of claims 1-7, wherein the electrolyte solution comprises cations of nanoparticles.

9. An electrode as obtainable by any of the methods 1 - 8.

10. A method comprising performing water electrolysis using the ceramic electrode of claim 9.

11. An electrolytic cell for electroplating, comprising:
an electrolyte solution,
a power source configured to provide DC current;
a first electrode electrically connected to a negative terminal of the power source;
a second electrode electrically connected to a positive terminal of the power source;
the first electrode is part of a cathode assembly, the assembly comprising the first electrode and a porous ceramic matrix, wherein a first outer surface of the ceramic matrix is in contact with the electrolyte, and wherein a second outer face of the ceramic matrix is in contact with the first electrode.

12. The electrolytic cell of claim 11, wherein the ceramic matrix comprises a hollow area along a longitudinal direction.

13. The electrolytic cell of claims 11 or 12, wherein the cathode assembly comprises the first electrode enclosed between the first outer surface of the ceramic matrix and a non-porous insulating cover.

14. The electrolytic cell of claim 13, wherein the non-porous insulating cover at least encloses the negatively charged electrode, the first and second end of the ceramic matrix and the first outer surface of the ceramic matrix.

15. The electrolytic cell of claims 11 - 14, wherein the ceramic matrix comprises a micro-porous structure, optionally wherein the ceramic matrix comprises at least one of zirconia, yttria, alumina and silica.
